Europäisches Patentamt

European Patent Office

Office européen des brevets

(19)

(11)    EP 1 655 850 A1

(12)    **EUROPEAN PATENT APPLICATION**
published in accordance with Art. 158(3) EPC

(43) Date of publication:
    **10.05.2006 Bulletin 2006/19**

(21) Application number: **04771593.3**

(22) Date of filing: **12.08.2004**

(51) Int Cl.:
    *H04B 1/38* (1968.09)    *H04B 1/04* (1968.09)
    *H04B 1/18* (1968.09)    *H01Q 1/50* (1968.09)

(86) International application number:
    **PCT/JP2004/011618**

(87) International publication number:
    **WO 2005/018101 (24.02.2005 Gazette 2005/08)**

(84) Designated Contracting States:
    **DE FR GB**

(30) Priority:    **14.08.2003 JP 2003293514**

(71) Applicant: **MATSUSHITA ELECTRIC INDUSTRIAL CO., LTD.**
    **Kadoma-shi, Osaka 571-8501 (JP)**

(72) Inventors:
    • **TAKAHASHI, Tsukasa**
        **Kanagawa 232-0061 (JP)**

    • **KOYANAGI, Yoshio**
        **Kanagawa 243-0405 (JP)**
    • **OGAWA, Koichi**
        **Osaka 573-1171 (JP)**

(74) Representative: **Grünecker, Kinkeldey, Stockmair & Schwanhäusser Anwaltssozietät**
    **Maximilianstrasse 58**
    **80538 München (DE)**

(54)    **ANTENNA MATCHING APPARATUS**

(57)    An antenna matching apparatus capable of eliminating impedance mismatching produced when the antenna element is placed close to the human body in a short time and reducing power loss due to impedance mismatching. This apparatus connects variable capacitance capacitors VC1 and VC2 for impedance adjustment to transmission antenna element TA1, connects variable capacitance capacitors VC3 and VC4 to reception antenna element RA1 respectively, provides beforehand capacitance values of respective variable capacitance capacitors which are impedance matched in a table in a one-to-one correspondence with the distances between the antenna elements and human body and stores the table in storage section (106). The apparatus completes adaptive control processing for any one of transmission antenna element TA1 and reception antenna element RA1, reads other capacitance values corresponding to the capacitance value at that moment from the table and performs adaptive control processing on other antenna elements using the read values as initial values.

FIG.3

## Description

Technical Field

The present invention relates to an antenna matching apparatus suitable for use in, for example, a radio communication apparatus such as a cellular phone set.

Background Art

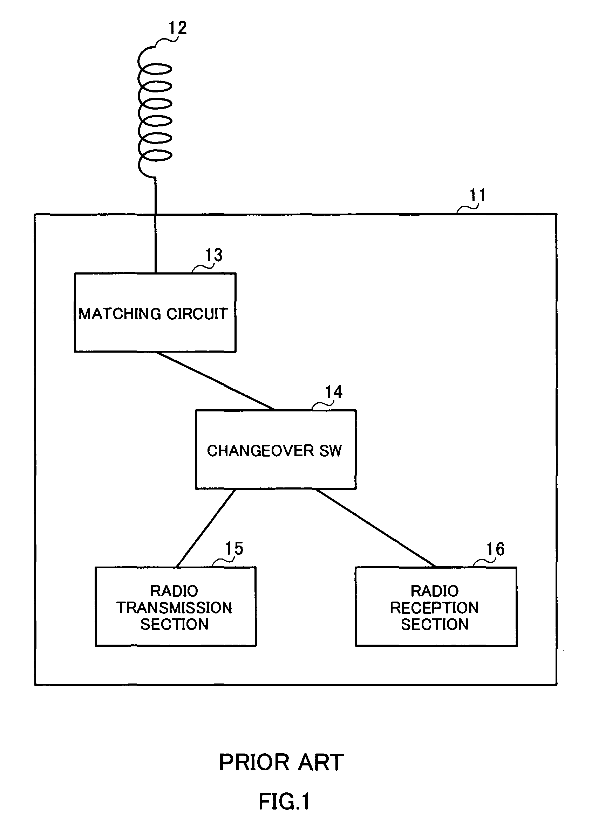

FIG.1 illustrates the configuration of a conventional cellular phone set. In this figure, case 11 is provided with helical antenna 12 outside the case and helical antenna 12 is connected to matching circuit 13 inside the case.

Furthermore, inside the case, matching circuit 13 is connected to radio transmission section 15 and radio reception section 16 via changeover switch 14. Matching circuit 13 is normally adjusted so that input impedance of helical antenna 12 is matched at an operating frequency in a free space.

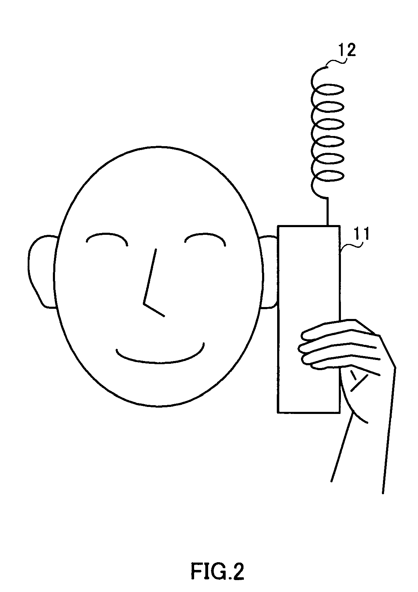

FIG. 2 illustrates an example of a cellular phone set shown in FIG. 1 when placed close to a human body. Here, the phone set is in a communication state as it is placed close to the human body. In this state, the input impedance of helical antenna 12 varies drastically, produces impedance mismatching and increases power loss. In order to decrease this power loss, an apparatus and algorithm for automatically matching the input impedance of helical antenna 12 have already been invented (see Patent Document 1).

Patent Document 1 : Unexamined Japanese Patent Publication No.HEI 8-097733

Disclosure of Invention

Problems to be Solved by the Invention

However, since there is only one helical antenna apparatus and the frequency band of the helical antenna apparatus is narrow, a delay is produced in a converging time through control when the transmission frequency is quite different from the reception frequency. On the other hand, when the transmission frequency is quite different from the reception frequency and transmission and reception are performed simultaneously, there is a problem that mismatching occurs in either transmission or reception and communication quality deteriorates drastically.

It is an object of the present invention to provide an antenna matching apparatus capable of eliminating impedance mismatching produced when an antenna apparatus mounted on a cellular phone or the like is placed close to a human body in a short time and reducing power loss due to impedance mismatching.

Means for Solving the Problem

An antenna matching apparatus according to the present invention adopts a configuration including a plurality of antenna elements, matching sections connected to the antenna elements that adjust impedance, a first detection section that detects any one of a signal reflected when power is supplied to the antenna elements, reflection coefficient and voltage standing wave ratio, a second detection section that detects signals received by the antenna elements, a storage section that stores control information on the matching sections in a one-to-one correspondence with the distances between the human body and antenna elements and a control section that adaptively controls the matching section using the control information stored in the storage section so as to achieve an impedance matched state.

Advantageous Effect of the Invention

According to the present invention, it is possible to eliminate impedance mismatching produced when an antenna apparatus mounted on a cellular phone or the like is placed close to a human body in a short time and reduce power loss due to impedance mismatching.

Brief Description of Drawings

FIG.1 illustrates the configuration of a conventional cellular phone set;
FIG.2 illustrates an example of a cellular phone set placed close to a human body;
FIG.3 is a block diagram showing the configuration of an antenna matching apparatus according to Embodiment 1 of the present invention;

FIG.4 illustrates a table stored in the storage section;

FIG.5A is a flow chart showing a processing procedure of the adaptive control section according to the embodiment of the present invention;

FIG.5B is a flow chart showing a processing procedure of the adaptive control section according to the embodiment of the present invention;

FIG.6A is a flow chart showing another processing procedure of the adaptive control section according to the embodiment of the present invention;

FIG.6B is a flow chart showing another processing procedure of the adaptive control section according to the embodiment of the present invention;

FIG.7 is a schematic view showing transmission/reception timing slots;

FIG.8 is a block diagram showing the configuration of an antenna matching apparatus according to Embodiment 2 of the present invention;

FIG.9 is a block diagram showing the configuration of an antenna matching apparatus according to Embodiment 3 of the present invention; and

FIG.10 is a configuration diagram showing an antenna matching apparatus according to another embodiment of the present invention.

Best Mode for Carrying Out the Invention

Now, embodiments of the present invention will be explained with reference to the accompanying drawings below.

(Embodiment 1)

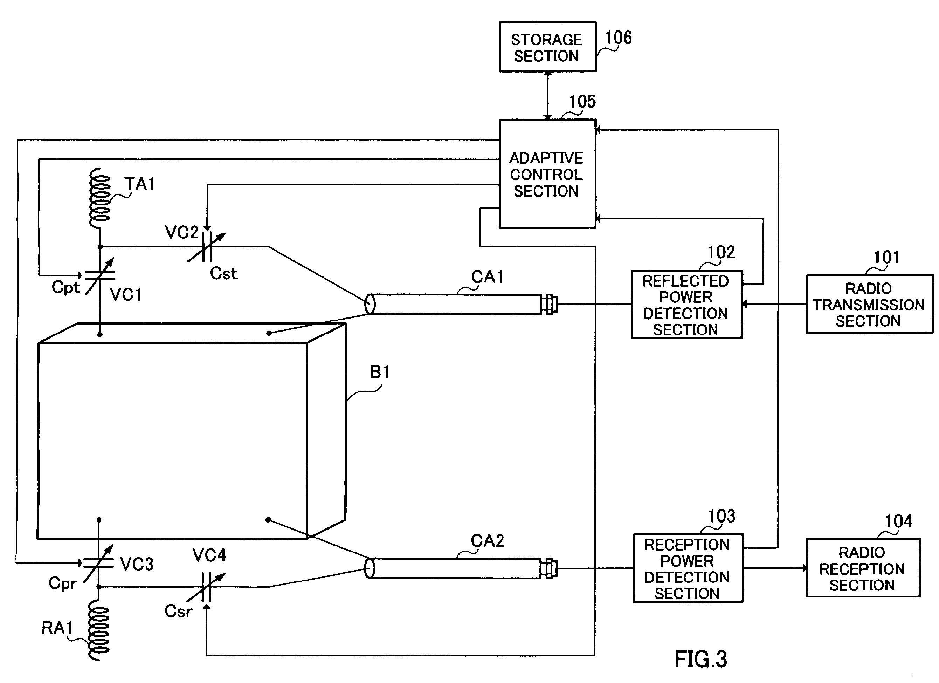

FIG.3 is a block diagram showing the configuration of an antenna matching apparatus according to Embodiment 1 of the present invention. In this figure, one end of transmission antenna element TA1 is connected to radio set case B1 made of a conductor via variable capacitance capacitor VC1 and also connected to a central conductor of a coaxial cable CA1 which is an unbalanced feeding line via variable capacitance capacitor VC2.

One end of reception antenna element RA1 is connected to radio set case B1 via variable capacitance capacitor VC3 and also connected to a central conductor of coaxial cable CA2 via variable capacitance capacitor VC4. Grounding conductors of coaxial cables CA1 and CA2 are connected to radio set case B1. Furthermore, the central conductor of coaxial cable CA1 is connected to reflected power detection section 102 and the central conductor of coaxial cable CA2 is connected to reception power detection section 103. Note that variable capacitance capacitors VC1 to VC4 function as matching sections.

Radio transmission section 101 performs transmission processing such as coding, modulation, D/A conversion on a signal to be transmitted to the other communication party and transmits the signal after the transmission processing as a radio wave of transmission frequency ft from transmission antenna element TA1 via reflected power detection section 102.

When impedance mismatching occurs in transmission antenna element TA1, reflection occurs at the mismatched section, and reflected power detection section 102 detects power of the reflected signal. The detected value is output to adaptive control section 105.

Reception power detection section 103 outputs the signal received by reception antenna element RA1 to radio reception section 104, detects power of the signal received by reception antenna element RA1 and outputs the detected value to adaptive control section 105.

Radio reception section 104 carries out reception processing such as A/D conversion, demodulation, decoding on the signal received by reception antenna element RA1.

Storage section 106 prestores capacitance values (control information) of variable capacitance capacitors according to the distances between the human body and antenna elements. Storage section 106 also stores initial values of variable capacitance capacitors VC1 to VC4.

Adaptive control section 105 measures a detected value of reflected power output from reflected power detection section 102, reads capacitance values from storage section 106 based on the measurement result and adaptively controls variable capacitance capacitors VC1 and VC2 using the read capacitance values as initial values so that the reflected power becomes minimum. Furthermore, adaptive control section 105 measures the detected value of the reception power output from reception power detection section 103, reads capacitance values from storage section 106 and adaptively controls variable capacitance capacitors VC3 and VC4 using the read capacitance values as initial values so that the reception power becomes maximum.

This allows impedance matching to be achieved for transmission antenna element TA1 and reception antenna element RA1.

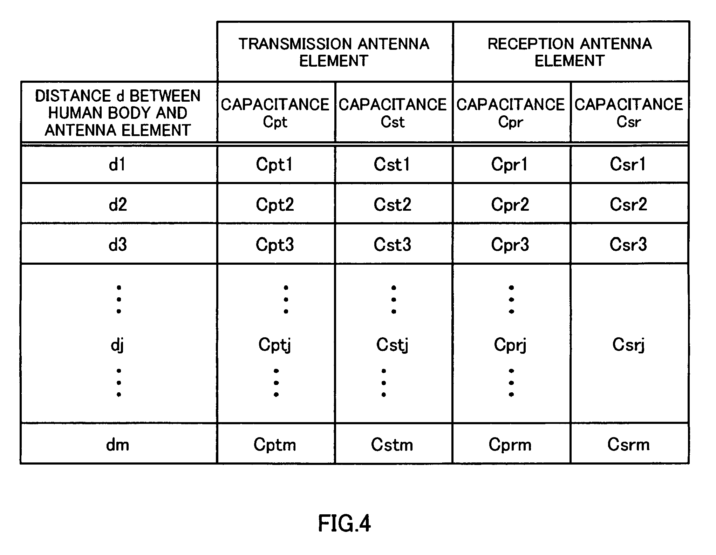

Here, storage section 106 will be explained more specifically. FIG.4 illustrates a table stored in storage section 106. In this figure, the distance between the human body and antenna element is assumed to be dj ($1<=j<=m$) and the capacitances of variable capacitance capacitors VC1, VC2 connected to transmission antenna element TA1 are assumed to be Cptj , Cstj in a one-to-one correspondence with dj. Furthermore, the capacitances of variable capacitance capacitors VC3, VC4 connected to reception antenna element RA1 are assumed to be Cprj, Csrj in a one-to-one correspondence with dj. For the respective capacitance values shown here, values are provided in advance that constitutes impedance matched state in a distance between corresponding the human body and antenna element and capacitance values of the respective variable capacitance capacitors are stored in a one-to-one correspondence.

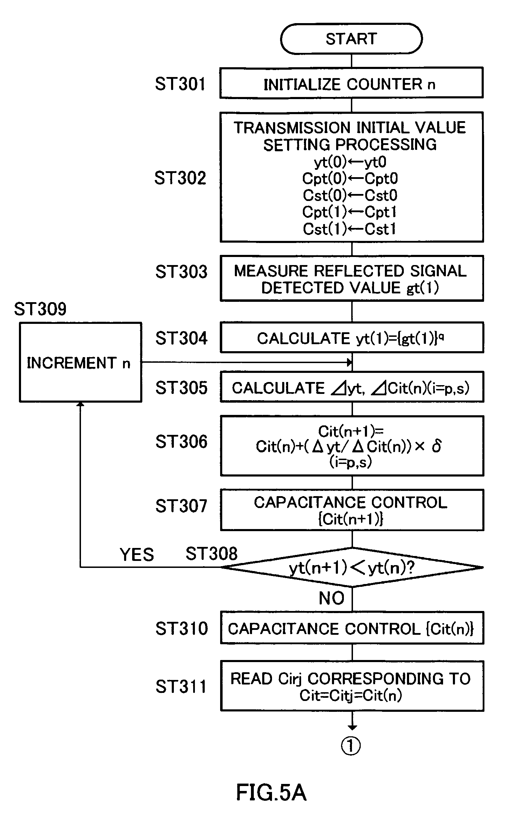

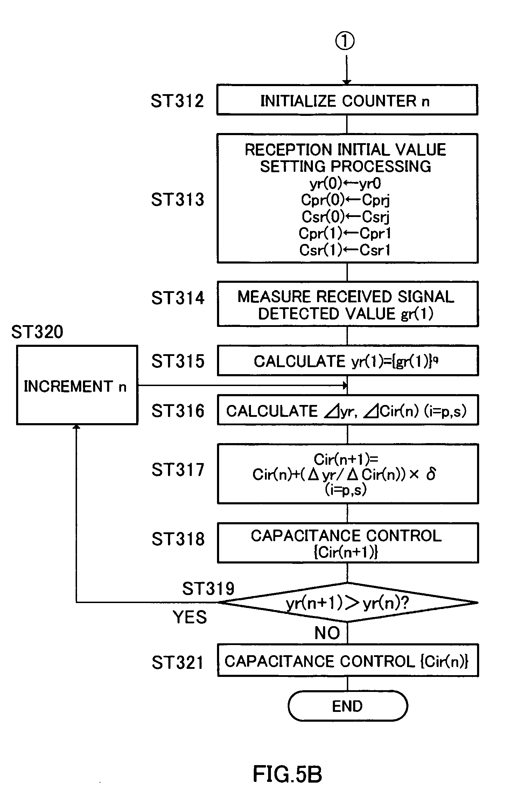

Next, a processing procedure in adaptive control section 105 will be explained. FIG. 5A and FIG.5B are flow charts showing the processing procedure of adaptive control section 105 according to this embodiment of the present invention. In this figure, in step (hereinafter abbreviated as "ST") 301, suppose counter n is initialized to n=1.

In ST302, transmission initial values are set. Assuming that yt(n) ={gt(n)}q is a transmission evaluation function, the following settings are made.

(1) Substitute initial value yt0 into evaluation function value yt(0).
(2) Substitute capacitance initial value Cpt0 of variable capacitance capacitor VC1 into capacitance value Cpt(0) .
(3) Substitute capacitance initial value Cst0 of variable capacitance capacitor VC2 into capacitance value Cst(0).
(4) Substitute predetermined capacitance value Cpt1 when n=1 into capacitance value Cpt(1) and set the capacitance value of variable capacitance capacitor VC1 to Cpt1.
(5) Substitute predetermined capacitance value Cst1 when n=1 into capacitance value Cst(1) and set the capacitance value of variable capacitance capacitor VC2 to Cst1.

In ST303, detected value gt detected by reflected power detection section 102 is measured and the measured value is substituted into gt(1). In ST304, gt(1) obtained in ST303 is substituted into the above described transmissionevaluationfunctionandyt(1) iscalculated.

In ST305, Δyt and ΔCit(n) (i=p,s) are calculated by the following expressions:

$$\Delta yt = yt(n-1) - yt(n) \quad \dots \quad (1)$$

$$\Delta Cit(n) = Cit(n-1) - Cit(n) (i=p, \ s) \quad \dots \quad (2)$$

In ST306, using the value obtained in ST305, Cit(n+1)(i=p,s) is calculated by the following expression:

$$Cit(n+1) = Cit(n) + \{\Delta yt / \Delta Cit(n)\} \times \delta (i=p, \ s) \quad \dots \quad (3)$$

where δ is an interval (period) for updating a sample (detected value gt) and is a value predetermined by the speed at which the value of the transmission evaluation function converges and a residual after the convergence.

In ST307, variable capacitance capacitors VC1 and VC2 are controlled so as to match Cit(n+1) calculated in ST306.

In ST308, since the capacitance is controlled to Cit(n+1) in ST307, yt(n+1) is calculated and yt(n+1) and yt(n) are compared to determine which is bigger or smaller. If yt(n+1)<yt(n), the process moves to ST309 and if yt(n+1)>=yt (n), the process moves to ST310. When an iteration count (counter n) is increased according to the method of calculating yt(n+1), there is n where yt(n+1)>=yt(n) and yt(n) becomes minimum at this time. That is, reflected signal detected value gt(n) becomes minimum. The processing in ST305 to ST307 is repeated until yt(n) becomes minimum. When yt(n) becomes minimum, that is, when reflected signal detected value gt(n) becomes minimum, transmission antenna element TA1 is impedance-matched.

In ST309, counter n is incremented and the process returns to ST305.

In ST310, variable capacitance capacitors VC1 and VC2 are controlled so as to match Cit(n) which is impedance-matched in ST308.

In ST311, Cirj (i=p,s) corresponding to Cit=Citj=Cit(n) (i=p,s) which corresponds to distance dj common to Cit=Citj=Cit(n) (i=p,s) is read based on the table shown in FIG.4 and the process moves to ST312.

Hereafter, adaptive control over reception antenna element RA1 will be performed. In ST312, counter n is initialized to n=1. In ST313, reception initial values are set. Assuming that $yr(n)=\{gr(n)\}^q$ is a reception evaluation function, the following setting is made using the value read from the table in ST311:

(1) Substitute initial value yr0 into evaluation function yr(0).
(2) Substitute capacitance initial value Cprj of variable capacitance capacitor VC3 into capacitance value Cpr (0).
(3) Substitute capacitance initial value Csrj of variable capacitance capacitor VC4 into capacitance value Csr(0).
(4) Substitute predetermined capacitance value Cpr1 when n=1 into capacitance value Cpr(1) and set the capacitance value of variable capacitance capacitor VC3 to Cpr1.
(5) Substitute predetermined capacitance value Csr1 when n=1 into capacitance value Csr(1) and set the capacitance value of variable capacitance capacitor VC4 to Csr1.

Thus, by setting Cirj corresponding to Citj when an impedance matched state is achieved for transmission antenna element TA1 to an initial value of adaptive control over reception antenna element RA1, it is possible to shorten the time required to achieve an impedance matched state for reception antenna element RA1.

In ST314, detected value gr detected by reception power detection section 103 is measured and the measured value is substituted into gr(1). In ST315, gr(1) obtained in ST314 is substituted into the above described reception evaluation function and yr(1) is calculated.

In ST316, Δyr and ΔCir(n) (i=p,s) are calculated by the following expressions:

$$\Delta yr = yr(n-1) - yr(n) \quad … \quad (4)$$

$$\Delta Cir(n) = Cir(n-1) - Cir(n) \quad (i=p,s) \quad … \quad (5)$$

In ST317, using the value calculated in ST316, Cir(n+1) (i=p,s) is calculated according to the following expression:

$$Cir(n+1) = Cir(n) + \{\Delta yr / \Delta Cir(n)\} \times \delta (i=p,s) \quad … \quad (6)$$

In ST318, variable capacitance capacitors VC3 and VC4 are controlled so as to match Cir(n+1) calculated in ST317.

In ST319, since the capacitance is controlled to Cir(n+1) in ST317, yr(n+1) is calculated and yr(n+1) and yr(n) are compared to determine which is bigger or smaller. If yr(n+1)>yr(n), the process moves to ST320 and if yr(n+1)<=yr (n), the process moves to ST321 assuming that the value of the reception evaluation function converged. Here, according to the method of calculating yr(n+1), if the iteration count (counter n) is increased, there is n which corresponds to yr (n+1)<=yr(n) and yr(n) becomes maximum at this time. That is, received signal detected value gr(n) becomes maximum. Until yr(n) is decided to be maximum, the processing from ST316 to ST318 is repeated. When yr (n) becomes maximum, that is, when received signal detected value gr (n) becomes maximum, reception antenna element RA1 is impedance-matched.

In ST320, counter n is incremented and the process returns to ST316.

In ST321, variable capacitance capacitors VC3 and VC4 are controlled so as to match Cir(n) which has been impedance-matched in ST319. Adaptive control on reception antenna element RA1 ends and adaptive control processing is completed.

Thus, by carrying out processing through adaptive control section 105, final capacitances Cpt(n), Cst(n), Cpr(n), Csr(n) are obtained and an impedance matched state is achieved at this time. It is possible to thereby correct an impedance difference when the antenna element is placed close to the human body during a conversation for example, reduce power loss caused by mismatching loss and secure good communication quality.

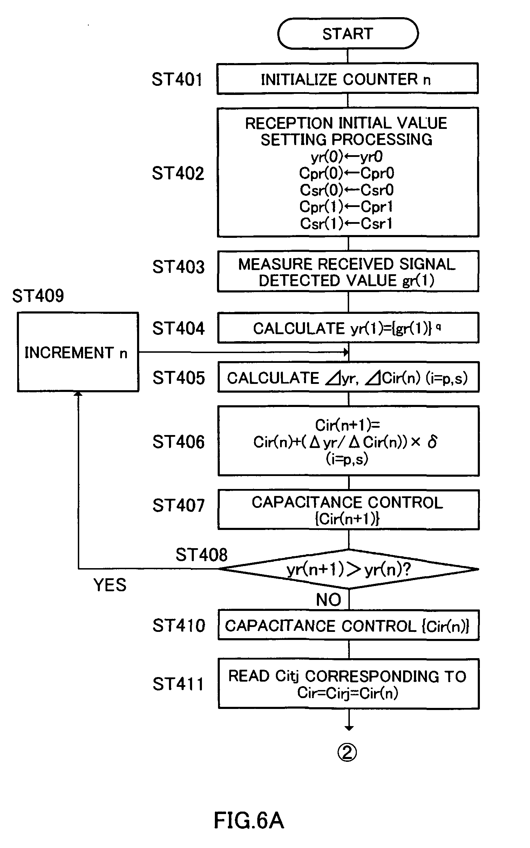

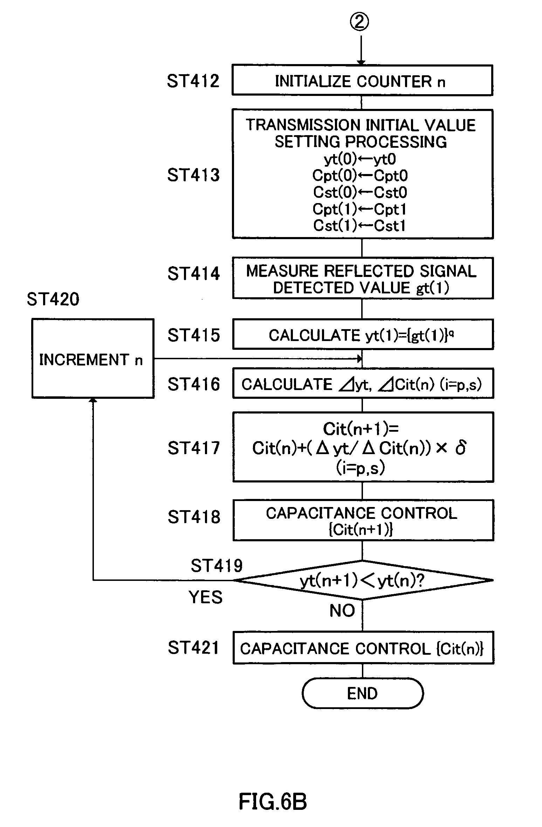

The above described explanations describes the case where the processing procedure of adaptive control section 105 is applied to controlling over variable capacitance capacitors VC3, VC4 connected to reception antenna element RA1 after variable capacitance capacitors VC1, VC2 connected to transmission antenna element TA1 is controlled. As shown in ST401 to ST411 in FIG.6A, it is possible to control variable capacitance capacitors VC1 and VC2 connected to transmission antenna element TA1 in ST412 to ST421 in FIG. 6B after controlling variable capacitance capacitors VC3 and VC4 connected to reception antenna element RA1. That is, adaptive control section 105 can start adaptive control processing even when reception or transmission is in progress.

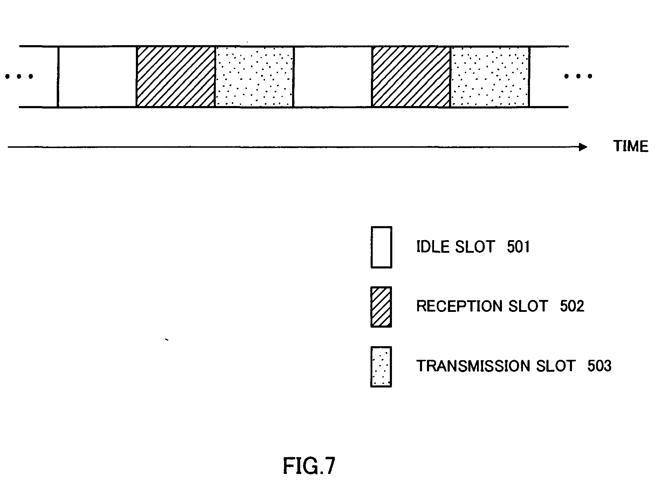

FIG.7 is a schematic view showing a transmission/reception timing slots. In this figure, timing slots is comprised of idle slot 501, reception slot 502 and transmission slot 503 in that order. It goes without saying that the above described adaptive control processing is performed by reception slot 502 and transmission slot 503, but adaptive control processing can also be performed by idle slot 501. Idle slot 501 is a slot used for transmission/reception of a control signal and when adaptive control processing is performed with idle slot 501, it is not necessary to keep or communication quality high as in the case of a transmission/reception slots, and therefore it is not also necessary to perform adaptive control processing at a high speed. For this reason, it is possible to reduce a processing burden required for calculations.

Thus, according to this embodiment, variable capacitance capacitors for impedance adjustment are connected to a transmission antenna element and reception antenna element respectively, capacitance values of the respective impedance-matched variable capacitance capacitors in a one-to-one correspondence with the distance between the antenna elements and human body are provided beforehand in a table, adaptive control processing on any one of the transmission antenna element and reception antenna element is completed, other capacitance values corresponding to the capacitance value at that time from the table are read and adaptive control processing on the other antenna element using the read values as initial values is carried out. It is therefore possible to achieve an impedance matched state in a short time, even when the distance between the antenna elements and human body changes and an impedance difference is produced, and also possible to reduce power loss caused by impedance mismatching and secure good communication quality.

(Embodiment 2)

Embodiment 1 explains the case where impedance matching is realized by controlling capacitance values of variable capacitance capacitors. This embodiment will explain a case where impedance matching is realized by controlling a voltage applied to a variable capacitance diode.

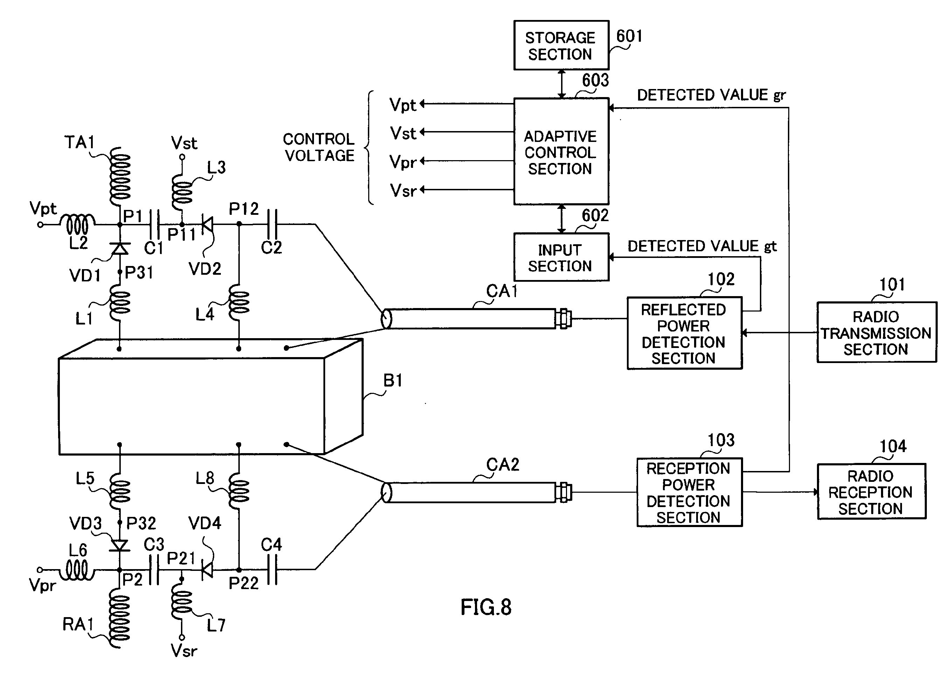

FIG. 8 is a block diagram showing the configuration of an antenna matching apparatus according to Embodiment 2 of the present invention. However, portions in FIG.8 common to the parts in FIG. 3 are assigned the same reference numerals as those in FIG.3 and detailed explanations thereof will be omitted.

One end of transmission antenna element TA1 is connected to a cathode of variable capacitance diode VD1 at connection point P1 and an anode of variable capacitance diode VD1 is connected to radio set case B1 via high-frequency prevention inductor L1 connected to connection point P31.

Furthermore, the one end of transmission antenna element TA1 is connected to high-frequency prevention inductor L2 at connection point P1 and high-frequency prevention inductor L2 is connected to an output terminal of control voltage Vpt of adaptive control section 603.

Furthermore, the one end of transmission antenna element TA1 is connected to DC voltage prevention capacitor C1 at connection point P1 and DC voltage prevention capacitor C1 is connected to a cathode of variable capacitance diode VD2 at connection point P11 and an output terminal of control voltage Vst of adaptive control section 603 via high-frequency prevention inductor L3.

An anode of variable capacitance diode VD2 is connected to a central conductor of coaxial cable CA1 via DC voltage prevention capacitor C2 at connection point P12 and connected to radio set case B1 via high-frequency prevention inductor L4.

One end of reception antenna element RA1 is connected to a cathode of variable capacitance diode VD3 at connection point P2 and an anode of variable capacitance diode VD3 is connected to radio set case B1 via high-frequency prevention inductor L5 connected to connection point P32.

Furthermore, the one end of reception antenna element RA1 is connected to high-frequency prevention inductor L6 at connection point P2 and high-frequency prevention inductor L6 is connected to an output terminal of control voltage Vpr of adaptive control section 603.

Furthermore, the one end of reception antenna element RA1 is connected to DC voltage prevention capacitor C3 at connection point P2 and DC voltage prevention capacitor C3 is connected to a cathode of variable capacitance diode VD4 and an output terminal of control voltage Vsr of adaptive control section 603 via high-frequency prevention inductor L7 at connection point P21. Here, the control voltage corresponds to control information.

An anode of variable capacitance diode VD4 is connected to a central conductor of coaxial cable CA2 via DC voltage prevention capacitor C4 at connection point P22 and also connected to radio set case B1 via high-frequency prevention inductor L8.

Storage section 601 stores control voltages (Vpt, Vst, Vpr, Vsr) which become impedance-matched when the antenna element is placed close to a human body and control voltages (Vpt, Vst, Vpr, Vsr) which are impedance-matched when the antenna element is not placed close to the human body as initial values. Furthermore, storage section 601 also stores a table using control voltages instead of capacitance values shown in FIG.4.

Input section 602 is provided with a switch and button or the like and users change the switch to report whether the antenna element is placed close to the human body or not to adaptive control section 603. This eliminates the necessity for providing any circuit to decide whether or not the antenna element is placed close to the human body and simplifies the circuit configuration.

Adaptive control section 603 reads control voltages stored in storage section 601 according to the content reported from input section 602 and uses the read control voltages as initial values for adaptive control.

This allows the difference between the control voltage when an impedance matched state is achieved through adaptive control and the initial values to be kept small and makes it possible to shorten the time required to achieve an impedance matched state. It is therefore possible to secure stable communication quality.

The processing at adaptive control section 603 only changes the capacitance value explained in Embodiment 1 to a control voltage and the rest of the processing is the same as that in Embodiment 1, and therefore detailed explanations thereof will be omitted.

Thus, this embodiment provides a control voltage at which an impedance matched state is achieved when the antenna element is placed close to the human body and a control voltage at which an impedance matched state is achieved when the antenna element is not placed close to the human body as initial values in advance, selects initial values depending on whether or not the antenna element is placed close to the human body, performs adaptive control processing using the selected initial value. It is therefore possible to shorten the time required until an impedance matched state is achieved and secure stable communication quality.

(Embodiment 3)

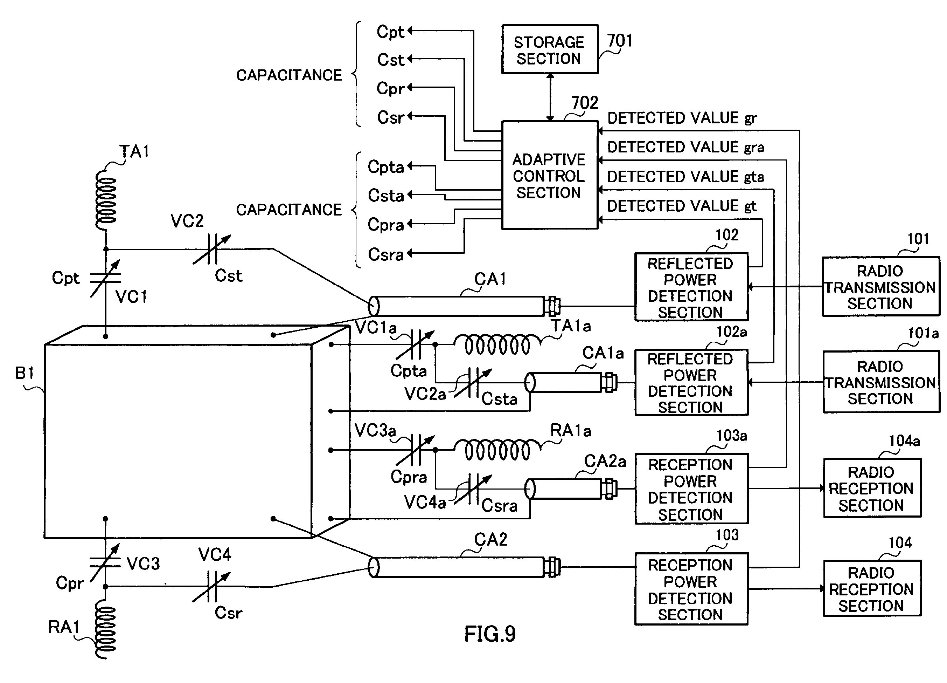

FIG.9 is a block diagram showing the configuration of an antenna matching apparatus according to Embodiment 3 of the present invention. However, portions in FIG.9 common to those in FIG.3 are assigned the same reference numerals and detailed explanations thereof will be omitted.

One end of transmission antenna element TA1a is connected to radio set case B1 made of a conductor via variable capacitance capacitor VC1a and also connected to a central conductor of coaxial cable CA1a which is an unbalanced feeding line via variable capacitance capacitor VC2a. A grounding conductor of coaxial cable CA1a is connected to radio set case B1. Furthermore, the central conductor of coaxial cable CA1a is connected to reflected power detection section 102a.

One end of reception antenna element RA1a is connected to radio set case B1 made of a conductor via variable capacitance capacitor VC3a and also connected to a central conductor of coaxial cable CA2a which is an unbalanced feeding line via variable capacitance capacitor VC4a. A grounding conductor of coaxial cable CA2a is connected to radio set case B1. The central conductor of coaxial cable CA2a is connected to reception power detection section 103a.

Radio transmission section 101a has the same configuration as that of radio transmission section 101, reflected power detection section 102a has the same configuration as that of reflected power detection section 102, reception power detection section 103a has the same configuration as that of reception power detection section 103 and reception radio section 104a has the same configuration as that of reception radio section 104. Suppose the value detected by reflected power detection section 102a is gta and suppose the value detected by reception power detection section 103a is gra. Furthermore, suppose a frequency band used by a combination of transmission antenna element TA1 and reception antenna element RA1 is different from a frequency band used by a combination of transmission antenna element TA1a and reception antenna element RA1a.

Storage section 701 stores the capacitance values of the variable capacitance capacitors connected to transmission antenna elements TA1 and TA1a and the capacitance values of the variable capacitance capacitors connected to reception antenna elements RA1 and RA1a in a one-to-one correspondence with the distances between the antenna elements and human body. Furthermore, storage section 701 also stores the capacitance initial values of the respective variable capacitance capacitors.

Adaptive control section 702 measures detected values gt and gta detected by reflected power detection sections 102 and 102a, reads the capacitance values from storage section 701 based on the measurement results, and adaptively controls the variable capacitance capacitors using the read capacitance values as the initial values such that the reflected power becomes minimum. Furthermore, adaptive control section 702 measures detected values gr and gra detected by reception power detection sections 103 and 103a, reads the capacitance values from storage section 701 based on the measurement results and adaptively controls the variable capacitance capacitors using the read values as the initial values so that the reception power becomes maximum.

Thus, according to this embodiment, when a plurality of sets of transmission antenna elements and reception antenna elements are provided and each set of transmission antenna elements correspond to different frequencies, it is possible to realize an impedance matched state in a short time even when the distance between the antenna element and human body changes and an impedance difference is produced. It is therefore, reduce power loss due to impedance mismatching and secure good communication quality.

(Other Embodiment)

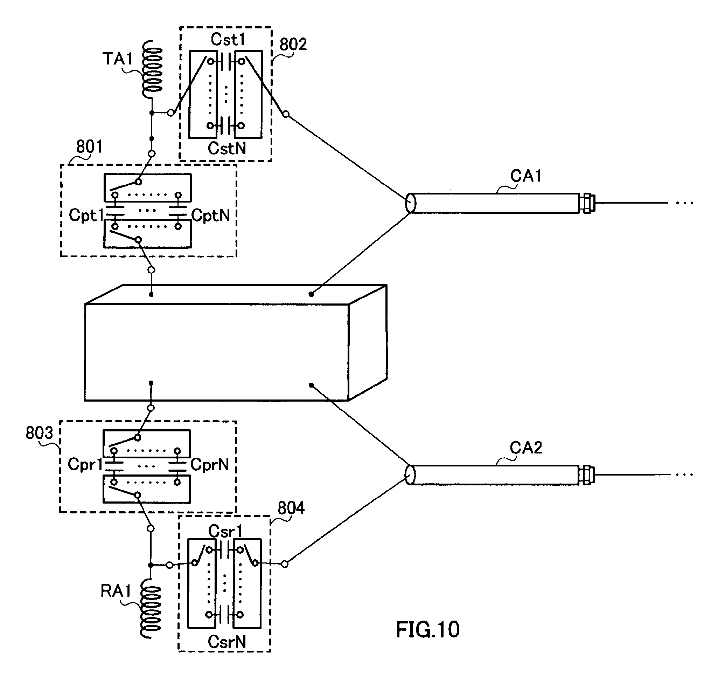

FIG.10 is a configuration diagram showing an antenna matching apparatus according to another embodiment of the present invention. However, portions in FIG.10 common to those in FIG.3 are assigned the same reference numerals as those in FIG.3 and detailed explanations thereof will be omitted. FIG.10 differs from FIG.3 in that the variable capacitance capacitors are substituted by capacitance switching sections provided with a plurality of capacitors and changeover switches.

Capacitance switching section 801 as a matching section is provided with a plurality of capacitors having different capacitance values Cpt1 to CptN and switches between capacitors connected by controlling the changeover switch. The same applies to capacitance switching sections 802 to 804.

This embodiment can be adapted to above described Embodiments 1 to 3 and capacitance switching sections 801 to 804 are controlled by an adaptive control section.

In the above described embodiments, helical antennas or whip antennas may be used as the antenna elements. The respective antenna elements may have different resonance frequencies.

In the above described embodiments, the reflected power detection section detects power of a reflected signal, but the present invention is not limited to this and may also be adapted so as to detect any one of a reflected signal, reflection coefficient and voltage standing wave ratio.

Furthermore, the above described embodiments explains that when the adaptive control section adaptively controls variable capacitance elements so that the value detected by the reflected power detection section decreases or the value detected by the reception power detection section increases, the adaptive control section completes adaptive control processing on any one of the plurality of antenna elements, reads other control information corresponding to the control information at that time from the storage section and adaptively controls variable capacitance elements of other antenna elements using the read control information, but the present invention is not limited to this and it includes a wide range of cases where variable capacitance elements using the control information stored in the storage section is adaptively controlled so as to achieve an impedance matched state.

A first aspect of the antenna matching apparatus of the present invention adopts a configuration including a plurality of antenna elements, matching sections respectively connected to the antenna elements that adjust impedance, a first detection section that detects any one of a signal reflected when power is supplied to the antenna elements, reflection coefficient and voltage standing wave ratio, a second detection section that detects signals received by the antenna elements, a storage section that stores control information on the matching sections in a one-to-one correspondence with the distances between the human body and antenna elements and a control section that adaptively controls the matching sections using the control information stored in the storage section so as to achieve an impedance matched state.

A second aspect of the antenna matching apparatus of the present invention adopts a configuration, in the above described configuration, in which when the control section adaptively controls the matching sections so that the value detected by the first detection section decreases or the value detected by the second detection section increases, the control section completes adaptive control processing on any one of the plurality of antenna elements, reads other control information corresponding to the control information at that time from the storage section and adaptively controls matching sections of other antenna elements using the read control information.

A third aspect of the antenna matching apparatus of the present invention adopts a configuration in the above configuration, in which the control section adaptively controls the matching sections based on a transmission evaluation function expressed by a predetermined multiple of a function including a reflected signal detected by the first detection section and a reception evaluation function expressed by a predetermined multiple of a function including a received signal detected by the second detection section.

According to these configurations, the first detection section and second detection section detect whether impedance is matched or mismatched and when the antenna element is placed close to the human body, for example, during a conversation and impedance is mismatched, by adaptively controlling the matching section of any one of the plurality of antennas, it is possible to achieve an impedance matched state. Also, by adaptively controlling the matching section of the other antenna using other control information corresponding to the control information at that time, it is possible to shorten the time required to achieve an impedance matched state and reduce power loss due to impedance mismatching.

A fourth aspect of the antenna matching apparatus of the present invention adopts a configuration in the above described configuration in which the storage section prestores control information that an impedance matched state is set when the antenna element is placed close to the human body and control information that an impedance matched state is set when the antenna element is not placed close to the human body and the control section starts adaptive control processing using any of the control information stored in the storage section as initial control information.

According to this configuration, initial control information is selectively used according to whether or not the antenna element is placed close to the human body, adaptive control processing is started with a small impedance difference, and it is possible to thereby shorten the time required to achieve an impedance matched state.

A fifth aspect of the antenna matching apparatus of the present invention adopts a configuration in the above described configuration, further including an input section whereby the user inputs information on whether or not the antenna element is placed close to the human body to the control section.

According to this configuration, providing the input section whereby the user inputs information on whether or not the antenna element is placed close to the human body eliminates the necessity for providing a circuit for deciding whether or not the antenna element is placed close to the human body and realizes a simple circuit configuration.

A sixth aspect of the antenna matching apparatus of the present invention adopts a configuration in the above described configuration in which a variable capacitance capacitor is used as the matching section and the capacitance value of the variable capacitance capacitor is used as control information.

A seventh aspect of the antenna matching apparatus of the present invention adopts a configuration in the above described configuration in which a variable capacitance diode is used as the matching section and a control voltage to be applied to the variable capacitance diode is used as control information.

According to these configurations, the variable capacitance capacitor or variable capacitance diode is used as the matching section and control is performed using a capacitance value or control voltage respectively, and it is possible to thereby achieve an impedance matched state.

An eighth aspect of the antenna matching apparatus of the present invention adopts a configuration in the above described configuration in which the matching section includes a plurality of capacitors having different capacitances and a switch section that selectively switches between the plurality of capacitors .

According to this configuration, it is possible to achieve an impedance matched state by selectively switching between the plurality of capacitors having different capacitances.

A ninth aspect of the antenna matching apparatus of the present invention adopts a configuration in the above described configuration in which the antenna element includes different resonance frequencies.

According to this configuration, if the resonance frequencies of the antenna elements are set for a transmission frequency and reception frequency respectively, it is possible to shorten the time required to achieve an impedance matched state even when the frequency of transmission is different from that of reception and reduce power loss due to impedance mismatching.

A tenth aspect of the antenna matching apparatus of the present invention adopts a configuration in the above described configuration in which the control section performs adaptive control processing in timing slots other than transmission slots and reception slots.

This configuration makes it possible to reduce influences on communication quality compared to a case where adaptive control processing is performed with transmission slots and reception slots and to reduce a processing burden required for calculations since the necessity for performing adaptive control processing at a high speed is not needed.

The present application is based on Japanese Patent Application No. 2003-293514 filed on August 14, 2003, entire content of which is expressly incorporated by reference herein.

Industrial Applicability

The antenna matching apparatus according to the present invention has an advantage of eliminating impedance mismatching in a short time produced when an antenna apparatus mounted on a cellular phone or the like is placed close to a human body, reducing power loss caused by impedance mismatching and being applicable to radio communication apparatuses such as cellular phone sets.

**Claims**

1. An antenna matching apparatus comprising:

   a plurality of antenna elements;
   matching sections respectively connected to said antenna elements that adjust impedance;
   a first detection section that detects any one of a signal reflected when power is supplied to said antenna elements, reflection coefficient and voltage standing wave ratio;
   a second detection section that detects signals received by said antenna elements;
   a storage section that stores control information on said matching sections in a one-to-one correspondence with the distances between the human body and antenna elements; and

a control section that adaptively controls said matching sections using the control information stored in said storage section so as to achieve an impedance matched state.

2. The antenna matching apparatus according to claim 1, wherein when said control section adaptively controls said matching sections so that the value detected by said first detection section decreases or the value detected by said second detection section increases, said control section completes adaptive control processing on any one of said plurality of antenna elements, reads other control information corresponding to the control information at that time from said storage section and adaptively controls matching sections of other antenna elements using the read control information.

3. The antenna matching apparatus according to claim 1, wherein said control section adaptively controls said matching sections based on a transmission evaluation function expressed by a predetermined multiple of a function including a reflected signal detected by said first detection section and a reception evaluation function expressed by a predetermined multiple of a function including a received signal detected by said second detection section.

4. The antenna matching apparatus according to claim 1, wherein said storage section prestores control information that an impedance matched state is set when the antenna element is placed close to the human body and control information that an impedance matched state is set when the antenna element is not placed close to the human body, and said control section starts adaptive control processing using any of the control information stored in said storage section as initial control information.

5. The antenna matching apparatus according to claim 4, further comprising an input section whereby the user inputs information on whether or not the antenna element is placed close to the human body to said control section.

6. The antenna matching apparatus according to claim 1, wherein a variable capacitance capacitor is used as said matching section and the capacitance value of said variable capacitance capacitor is used as control information.

7. The antenna matching apparatus according to claim 1, wherein a variable capacitance diode is used as said matching section and a control voltage to be applied to said variable capacitance diode is used as control information.

8. The antenna matching apparatus according to claim 1, wherein said matching section comprises a plurality of capacitors having different capacitances and a switch section that selectively switches between saidplurality of capacitors.

9. The antenna matching apparatus according to claim 1, wherein said antenna element comprises different resonance frequencies.

10. The antenna matching apparatus according to claim 1, wherein said control section performs adaptive control processing in timing slots other than transmission slots and reception slots.

12

13

MATCHING CIRCUIT

14

CHANGEOVER SW

15

RADIO
TRANSMISSION
SECTION

16

RADIO
RECEPTION
SECTION

11

PRIOR ART

FIG.1

FIG.2

FIG.3

EP 1 655 850 A1

| DISTANCE d BETWEEN HUMAN BODY AND ANTENNA ELEMENT | TRANSMISSION ANTENNA ELEMENT | | RECEPTION ANTENNA ELEMENT | |
|---|---|---|---|---|
| | CAPACITANCE Cpt | CAPACITANCE Cst | CAPACITANCE Cpr | CAPACITANCE Csr |
| d1 | Cpt1 | Cst1 | Cpr1 | Csr1 |
| d2 | Cpt2 | Cst2 | Cpr2 | Csr2 |
| d3 | Cpt3 | Cst3 | Cpr3 | Csr3 |
| ⋮ dj ⋮ | ⋮ Cptj ⋮ | ⋮ Cstj ⋮ | ⋮ Cprj ⋮ | Csrj |
| dm | Cptm | Cstm | Cprm | Csrm |

FIG.4

EP 1 655 850 A1

START

ST301 — INITIALIZE COUNTER n

ST302 — TRANSMISSION INITIAL VALUE SETTING PROCESSING
$yt(0) \leftarrow yt0$
$Cpt(0) \leftarrow Cpt0$
$Cst(0) \leftarrow Cst0$
$Cpt(1) \leftarrow Cpt1$
$Cst(1) \leftarrow Cst1$

ST303 — MEASURE REFLECTED SIGNAL DETECTED VALUE $gt(1)$

ST309 — INCREMENT n

ST304 — CALCULATE $yt(1)=\{gt(1)\}^q$

ST305 — CALCULATE $\Delta yt$, $\Delta Cit(n)(i=p,s)$

ST306 — $Cit(n+1)= Cit(n)+(\Delta yt/\Delta Cit(n)) \times \delta$ $(i=p,s)$

ST307 — CAPACITANCE CONTROL $\{Cit(n+1)\}$

ST308 — $yt(n+1) < yt(n)$?

YES

NO

ST310 — CAPACITANCE CONTROL $\{Cit(n)\}$

ST311 — READ $Cirj$ CORRESPONDING TO $Cit=Citj=Cit(n)$

①

FIG.5A

15

①

ST312 | INITIALIZE COUNTER n

ST313 | RECEPTION INITIAL VALUE
SETTING PROCESSING
$yr(0) \leftarrow yr0$
$Cpr(0) \leftarrow Cprj$
$Csr(0) \leftarrow Csrj$
$Cpr(1) \leftarrow Cpr1$
$Csr(1) \leftarrow Csr1$

ST314 | MEASURE RECEIVED SIGNAL
DETECTED VALUE $gr(1)$

ST315 | CALCULATE $yr(1) = \{gr(1)\}^q$

ST320 | INCREMENT n

ST316 | CALCULATE $\Delta yr$, $\Delta Cir(n)$ $(i=p,s)$

ST317 | $Cir(n+1) =$
$Cir(n) + (\Delta yr / \Delta Cir(n)) \times \delta$
$(i=p,s)$

ST318 | CAPACITANCE CONTROL
$\{Cir(n+1)\}$

ST319 | $yr(n+1) > yr(n)$?

YES

NO

ST321 | CAPACITANCE CONTROL $\{Cir(n)\}$

END

FIG.5B

START

ST401 | INITIALIZE COUNTER n

ST402 | RECEPTION INITIAL VALUE
SETTING PROCESSING
$yr(0) \leftarrow yr0$
$Cpr(0) \leftarrow Cpr0$
$Csr(0) \leftarrow Csr0$
$Cpr(1) \leftarrow Cpr1$
$Csr(1) \leftarrow Csr1$

ST403 | MEASURE RECEIVED SIGNAL
DETECTED VALUE $gr(1)$

ST404 | CALCULATE $yr(1)=\{gr(1)\}^q$

ST409 | INCREMENT n

ST405 | CALCULATE $\Delta yr$, $\Delta Cir(n)$ $(i=p,s)$

ST406 | $Cir(n+1)=$
$Cir(n)+(\Delta yr/\Delta Cir(n)) \times \delta$
$(i=p,s)$

ST407 | CAPACITANCE CONTROL
$\{Cir(n+1)\}$

ST408 | $yr(n+1) > yr(n)$?

YES

NO

ST410 | CAPACITANCE CONTROL $\{Cir(n)\}$

ST411 | READ $Citj$ CORRESPONDING TO
$Cir=Cirj=Cir(n)$

②

FIG.6A

②

ST412 | INITIALIZE COUNTER n

ST413 | TRANSMISSION INITIAL VALUE SETTING PROCESSING
$yt(0) \leftarrow yt0$
$Cpt(0) \leftarrow Cpt0$
$Cst(0) \leftarrow Cst0$
$Cpt(1) \leftarrow Cpt1$
$Cst(1) \leftarrow Cst1$

ST414 | MEASURE REFLECTED SIGNAL DETECTED VALUE $gt(1)$

ST420

INCREMENT n

ST415 | CALCULATE $yt(1)=\{gt(1)\}^a$

ST416 | CALCULATE $\Delta yt$, $\Delta Cit(n)$ $(i=p,s)$

ST417 | $Cit(n+1)=$
$Cit(n)+(\Delta yt / \Delta Cit(n)) \times \delta$
$(i=p,s)$

ST418 | CAPACITANCE CONTROL $\{Cit(n+1)\}$

ST419 | $yt(n+1) < yt(n)$?

YES

NO

ST421 | CAPACITANCE CONTROL $\{Cit(n)\}$

END

FIG.6B

EP 1 655 850 A1

TIME

☐ IDLE SLOT 501

▨ RECEPTION SLOT 502

▨ TRANSMISSION SLOT 503

FIG.7

FIG.8

FIG.9

FIG.10

EP 1 655 850 A1

## INTERNATIONAL SEARCH REPORT

| | International application No. |
|---|---|
| | PCT/JP2004/011618 |

**A. CLASSIFICATION OF SUBJECT MATTER**
Int.Cl$^7$  H04B1/38, H04B1/04, H04B1/18, H01Q1/50

According to International Patent Classification (IPC) or to both national classification and IPC

**B. FIELDS SEARCHED**

Minimum documentation searched (classification system followed by classification symbols)
Int.Cl$^7$  H04B1/38, H04B1/04, H04B1/18, H01Q1/50

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-251956 A  (NEC Corp.),<br>17 September, 1999 (17.09.99),<br>Full text; all drawings<br>(Family: none) | 1-10 |
| A | JP 2000-124723 A  (Sony Corp.),<br>28 April, 2000 (28.04.00),<br>Par. No. [0023]; Fig. 1<br>(Family: none) | 1-10 |

☒ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 November, 2004 (09.11.04) | 22 November, 2004 (22.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

## INTERNATIONAL SEARCH REPORT

| | International application No. |
|---|---|
| | PCT/JP2004/011618 |

C (Continuation). DOCUMENTS CONSIDERED TO BE RELEVANT

| Category* | Citation of document, with indication, where appropriate, of the relevant passages | Relevant to claim No. |
|---|---|---|
| A | Koichi OGAWA, Yoshio KOYANAGI, Koichi ITO, "Active Impedance Seigyo ni yoru Herical Antenna no Jintai Eikyo Keigen Taisaku", The Institute of Electronics, Information and Communication Engineers 2002 Nen Sogo Taikai Koen Ronbunshu, 30 March, 2002 (30.03.02), Tsushin 1-SBC-1-7, pages 813 to 814 | 1-10 |

Form PCT/ISA/210 (continuation of second sheet) (January 2004)